Europäisches Patentamt

European Patent Office

Office européen des brevets

(19)

(11) Veröffentlichungsnummer: **0 128 438**
**B1**

(12) **EUROPÄISCHE PATENTSCHRIFT**

(45) Veröffentlichungstag der Patentschrift:
08.02.89

(51) Int. Cl.⁴: **B 30 B 11/00, B 28 B 3/00**

(21) Anmeldenummer: 84106034.6

(22) Anmeldetag: 26.05.84

(54) Verfahren zum Herstellen eines Profils aus trockenem Pulvermaterial sowie Vorrichtung hierzu.

(30) Priorität: 13.06.83 DE 3321285

(43) Veröffentlichungstag der Anmeldung:
19.12.84 Patentblatt 84/51

(45) Bekanntmachung des Hinweises auf die Patenterteilung:
08.02.89 Patentblatt 89/6

(84) Benannte Vertragsstaaten:
BE CH DE FR GB IT LI SE

(56) Entgegenhaltungen:
EP-A- 0 097 497
GB-A- 800 451
US-A- 2 902 714
US-A- 3 192 298
US-A- 4 370 120

(73) Patentinhaber: Stigler, Anton, Am Rad 5 1/2,
D-8240 Berchtesgaden (DE)

(72) Erfinder: Stigler, Anton, Am Rad 5 1/2,
D-8240 Berchtesgaden (DE)

(74) Vertreter: Flach, Dieter Rolf Paul, Dipl.-Phys. et al,
Patentanwälte Andrae/Flach/Haug/Kneissl
Prinzregentenstrasse 24, D-8200 Rosenheim (DE)

## Beschreibung

Die Erfindung betrifft ein Verfahren zum Herstellen eines Profils aus trockenem Pulvermaterial nach dem Oberbegriff des Anspruches 1 sowie eine Vorrichtung zur Durchführung des Verfahrens nach dem Oberbegriff des Anspruches 5.

Isostatische oder quasi isostatische Pressen zum Herstellen von Voll- oder Hohlprofilen, beispielsweise von Rohren, sind aus der GB-PS 2 074 086, der US-PS 4 370 120 und der US-PS 3 193 900 bekanntgeworden und bestehen im wesentlichen aus einem Formhohlraum, der von einer flexiblen Form umgeben und begrenzt ist. Die flexible Form ist in ihrer axialen Länge radial von allen Seiten mit einem Aussendruck beispielsweise hydraulisch oder pneumatisch beaufschlagbar, wodurch das in den Formhohlraum einbringbare Pulvermaterial beispielsweise über einen Druckraum in Radialrichtung verdichtet und gepresst werden kann. Durch diese vorbekannten Pressen und die damit angewandten Herstellungsverfahren lassen sich aber nur Profilstücke, also beispielsweise in ihrer Länge beschränkte Rohre herstellen.

Aus der DE-PS 752 704 und der DE-AS 2 147 333 ist aber auch ein Verfahren und eine Vorrichtung zum schrittweisen Herstellen eines fortlaufenden Stranges rohrförmiger Pressstücke bekanntgeworden. Bei dem aus der DE-PS 752 704 vorbekannten Strangpressverfahren wird dabei aber nur in Axialrichtung durch einen Pressstempel von oben nach unten schrittweise verdichtet, was sich zum einen nachteilhaft auf eine gleichmässige Verdichtung und zum anderen auf eine ausreichende Verbindung der schrittweise nacheinander verdichteten Pressabschnitte auswirken kann.

Demgegenüber ist es Aufgabe der Erfindung ein Verfahren und eine Vorrichtung zur Durchführung des Verfahrens zur Herstellung von endlosen Voll- bzw. Hohlprofilen aus trockenem Pulvermaterial mittels isostatischer Pressen zu schaffen, bei denen die Profile mit gleichmässiger Dichteverteilung und hoher Bruchfestigkeit herstellbar sind.

Die Aufgabe wird bezüglich des Verfahrens entsprechend den im kennzeichnenden Teil des Anspruches 1 und bezüglich der Vorrichtung entsprechend den im kennzeichnenden Teil des Anspruches 5 angegebenen Merkmalen gelöst. Vorteilhafte Ausgestaltungen der Erfindung sind in den Unteransprüchen angegeben.

Durch das erfindungsgemässe Verfahren wird auf einfache und optimale Weise eine kontinuierliche abschnittweise Herstellung von Voll- sowie auch von Hohlprofilen aus trockenem Pulvermaterial erstmals möglich.

Die herzustellenden Profilteile können dabei insbesondere einen kreisförmigen oder ovalen Querschnitt aufweisen. Ebenso möglich sind aber auch andere Formen. Die Hohlgüte der vollständig verpressten Formteile wird dabei insbesondere durch die spezifische Ausbildung der konisch zulaufenden Endabschnitte des Formhohlraumes und damit auch der geformten Profilteile ermöglicht.

In einer besonders bevorzugten Ausbildung der Erfindung nach Anspruch 2 ist ferner noch eine Kernstange vorgesehen, um auch Hohlprofile, insbesondere Rohre endlos herstellen zu können.

Anspruch 3 und 4 betreffen eine besonders bevorzugte Ausführungsform der Erfindung zur Herstellung von ebenfalls Hohlprofilen, wobei im Inneren eine in Axialrichtung verschiebbar geführte Kernstange vorgesehen ist, über die das trockene Pulvermaterial über eine Innenbohrung in der Kernstange und über radiale Austrittsöffnungen dem Formhohlraum zugeführt wird.

Die Ansprüche 5 bis 9 betreffen eine Vorrichtung, wobei in einer vorteilhaften Ausgestaltung der Erfindung nach Anspruch 8 und 9 eine sog. Kompensationszone am Austritt der gepressten Profilabschnitte zur Minimierung und Reduzierung der während des Pressvorganges in Axialrichtung umgeleiteten Kräfte vorgesehen ist. Hierdurch wird eine Beeinträchtigung des jeweils gepressten Profilteiles vermieden.

Demgemäss lassen sich also durch das erfindungsgemässe Verfahren und die erfindungsgemässe Vorrichtung die folgenden Vorteile erzielen:

- Mit vergleichsweise geringen Formkosten können verschiedenste Profile hergestellt werden. Dabei ist jeweils nur der Austausch der inneren flexiblen Pressform, also des flexiblen Formhohlraumes notwendig.
- Die erfindungsgemäss herstellbaren endlos langen Hohl- oder Vollprofile können aus trockenem Presspulver mit absolut gleichmässiger Dichteverteilung hergestellt werden.
- Die Ausstossleistung kann ein Vielfaches aller bisher bekannten Verfahren ausmachen.
- Ein Trocknungsprozess ist nicht notwendig.
- Eine grosse Masshaltigkeit der Profile lässt sich durch eine unmittelbar am Strangaustritt befindliche Nachbearbeitungseinrichtung, z.B. eine Schleifmaschine o.ä., erzielen.

Weitere Vorteile und Einzelheiten der Erfindung ergeben sich nachfolgend aus den anhand von Zeichnungen dargestellten Ausführungsbeispielen. Dabei zeigen im einzelnen:

Figur 1 bis 3: eine erfindungsgemässe Vorrichtung in einem ersten Ausführungsbeispiel in einem Längsschnitt in drei verschiedenen Bearbeitungsstufen;

Figur 4 bis 6: eine weitere Ausführungsform der erfindungsgemässen Vorrichtung in schematischer Längsschnittdarstellung in drei verschiedenen Bearbeitungsstufen, mit der Hohlprofile hergestellt werden können.

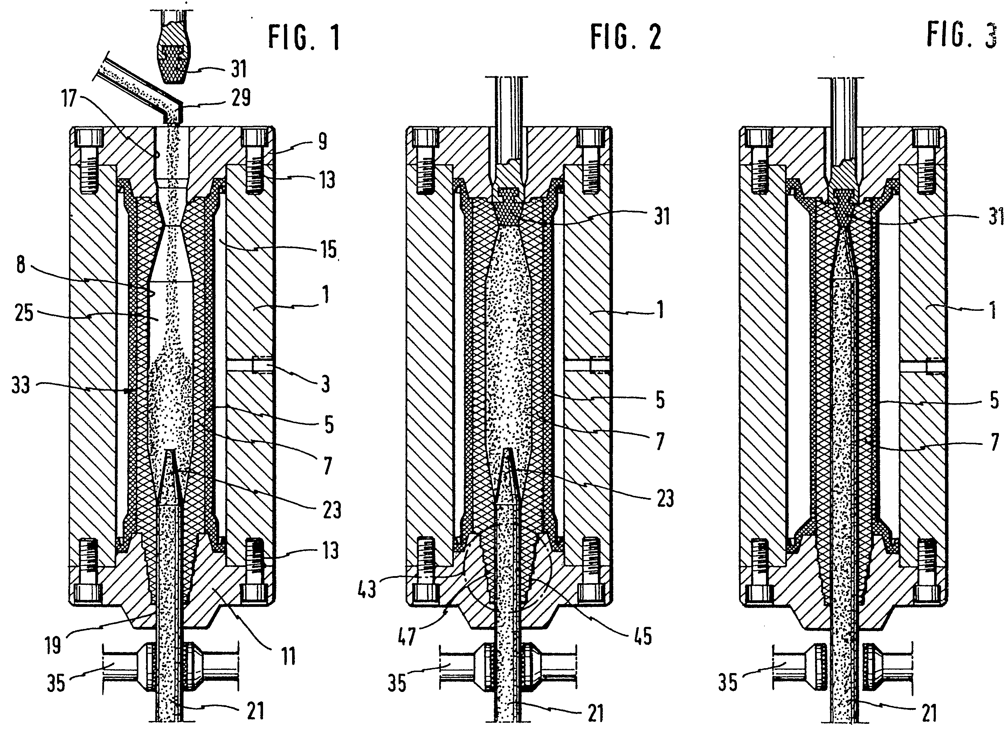

Zunächst wird auf die Figuren 1 bis 3 Bezug genommen, in denen ein erstes Ausführungsbeispiel der erfindungsgemässen Radial-Trockenpulver-Strangpresse zur Herstellung von Vollprofilen im gezeigten Ausführungsbeispiel mit kreisförmigem Querschnitt gezeigt ist.

Die Strangpresse besteht dabei aus einem Druckbehälter 1, der mit einem Anschluss 3 zur Zuführung des Druckmediums versehen ist. In dem Druckbehälter 1 eingebaut ist eine äussere flexible Dichtmembran 5, in der im Inneren die flexible und den Formhohlraum bildende Form 7 mit einer Innenfläche 8 angeordnet ist. Der Druckbehälter ist stirnseitig durch einen oberen Druckflansch 9 und einen unteren Druckflansch 11 verschlossen. Die Verschraubungen können dabei durch Inbusschrauben 13 erfolgen.

Der Anschluss 3 für das Druckmedium steht im Inneren des Druckbehälters 1 mit einem Ringraum 15 in Verbindung, dessen Axialhöhe im wesentlichen der Höhe der Dichtmembran 5 bzw. der elastischen Form 7 entspricht.

Wie sich aus Figur 1 ergibt, ist im oberen Druckflansch 9 eine Zuführbohrung 17 vorgesehen. Im unteren Druckflansch 11 ist eine Profilaustrittsöffnung 19 eingebracht.

Nachfolgend wird auf die Funktionsweise der Strangpresse eingegangen.

In Figur 1 ist bereits der letzte gepresste Profilabschnitt 21 soweit nach aussen gezogen worden, dass nur noch sein konisches Profilende 23 in den durch die elastische Form 7 begrenzten Formhohlraum 25 hineinragt. Bei geöffneter oberer Zuführbohrung 17 wird dann das trockene Presspulver, z.B. keramische Presspulver oder Pulvermetalle oder ähnliches über eine Schütte 29 in den Formhohlraum 25 bis zum oberen Ende gefüllt. Danach wird die obere Zuführöffnung 17 mittels eines Stopfens 31 verschlossen, wie sich aus Figur 2 ergibt.

Dabei ist wichtig, dass der Formhohlraum 25 an seinen beiden gegenüberliegenden Axialseiten sich gegenüber seinem mittleren Abschnitt 33 verjüngt, und zwar am oberen Ende bis auf die Zuführbohrung 17 und am unteren Ende bis auf die dem Profildurchmesser entsprechende Profilaustrittsöffnung 19. Während des Befüllens des Füllraumes mit einer volumen- oder gewichtsmässig vordosierten Menge Presspulver kommt es somit zu einer Überdeckung des eingefüllten unverpressten Presspulvers mit dem Profilende 23 des zuletzt bereits gepressten Profiles 21.

Wie in Figur 3 dargestellt, wird nunmehr über den Anschluss 3 und den Ringraum 15 Druckmedium im Inneren des Druckbehälters zugeführt, wobei die Dichtmembran 5 und die elastische Form 7 radial zusammengepresst werden. Dadurch wird das eingefüllte Presspulver ebenfalls bis auf Profilaussendurchmesser komprimiert und verdichtet, wobei auch im Überdeckungsbereich am Profilende 23 eine feste Verpressung mit dem zuletzt gepressten Profil 21 erzielt wird.

Wie aus den Figuren 1 bis 3 ferner noch hervorgeht, ist ausserhalb des Druckbehältes noch ein Greiferpaar 35 angeordnet, das während des gesamten Befüll- und Pressvorganges das nach draussen ragende Profil 21 festhält. Nachdem eine neue Füllung ebenfalls verpresst wurde, kann bei geöffnetem Greiferpaar 35 durch nicht dargestellte weitere Greifer das Profil 21 um einen Abschnitt nach unten oder durch die Greiferpaare 35 selbst in Axialrichtung herausgezogen werden.

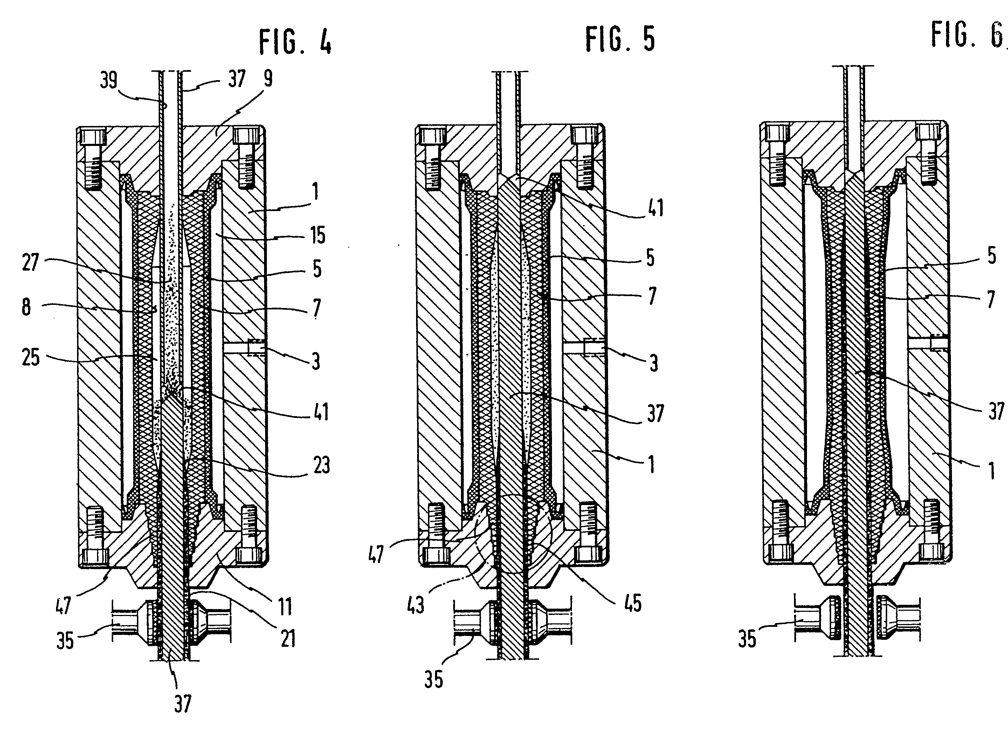

Nachfolgend wird noch auf die Figuren 4 bis 6 eingegangen, in denen gleiche oder ähnliche Teile mit den gleichen Bezugsziffern benannt sind. Dieses Ausführungsbeispiel unterscheidet sich von dem vorstehend erläuterten dadurch, dass hiermit Hohlprofile, insbesondere endlose Rohre taktweise hergestellt werden können.

In dieser Ausführungsform wird der Formhohlraum 25 völlig in Axialrichtung von einer Kernstange 37 durchsetzt, auf derem unteren herausragenden Ende das zuletzt gepresste Hohlprofil 21 mit dem in den Formhohlraum 25 hineinragenden Profilende 23 sitzt. In der Kernstange 37 ist eine Längsbohrung 39 eingebracht, über das das trockene Presspulver 27 über radiale Austrittsöffnungen 41, beispielsweise ebenfalls wieder in einer volumen- oder gewichtsmässig vordosierten Menge in den Füllraum 25 strömt. Während des Befüllens wird dabei die Kernstange 37 von unten nach oben langsam zurückgezogen. Der Füllvorgang ist beendet, wenn die radialen Austrittsöffnungen 41 die in Figur 6 gezeigte Stellung erreicht haben, in der der Füllraum hermetisch abgedichtet ist. Während des Befüllens hält dabei die Greifeinrichtung 35 den bereits vorgepressten letzten Profilabschnitt 21 fest, damit dieser der Axialbewegung der Kernstange 37 nicht folgt.

Danach erfolgt ebenfalls wieder unter Druckbeaufschlagung der radiale Pressvorgang, wie er in Figur 6 dargestellt ist. Auch hierbei wird das soeben eingefüllte Presspulver mit dem schon zuvor gepressten Hohlprofil 21 in gleichmässiger Dichte optimal verbunden.

Nachdem der Ringraum 15 wieder drucklos gemacht wurde, wird beispielsweise bei geöffnetem Greifmechanismus 35 die Kernstange 37 wieder nach unten bewegt, und zwar um eine Taktlänge, wodurch der zuletzt gepresste Hohlprofilabschnitt 21 wiederum die in Figur 4 gezeigte Lage einnimmt, in der die Radialpresse wieder ihre Füllposition eingenommen hat.

Abschliessend soll noch auf eine Kompensationseinrichtung 43, wie sie in Figur 2 und 5 mit der Bezugsziffer 43 gekennzeichnet ist, eingegangen werden.

Da während des radialen Verdichtungsvorganges des Presspulvers auch enorme Kräfte in Axialrichtung, insbesondere in Richtung des zuletzt vorgepressten Profilabschnittes 21 auftreten, wird mittels der Kompensationseinrichtung 43 erreicht, dass die Kräfte in Axialrichtung minimiert, wenn nicht gar ganz reduziert werden, um Spannungsrisse am jeweils gepressten Profil 21 zu vermeiden. In den gezeigten Ausführungsbeispielen ist dabei der untere Druckflansch 11 von der elastischen Form 7 nach aussen hin mit einer sich verjüngenden Bohrung 45 versehen. Diese kann aus mehreren Stufen bestehen, die jeweils nach aussen und auf die Symmetrieachse zu geneigt sind, wobei in dieser Bohrung 45 ein Fortsatz 47 der elastischen Form 7 zu liegen kommt.

Abschliessend soll ganz allgemein noch darauf hingewiesen werden, dass grundsätzlich die Verschliessung der Radialöffnungen 41 zum Befüllen des Formhohlraumes 25 auch anders als im gezeigten Ausführungsbeispiel vorgenommen werden kann, beispielsweise durch Herabsenken eines Innenrohres bis über die Radialöffnung 41 etc. Möglich ist ebenso ein Hohlprofil bei feststehender Kernstange erfindungsgemäss herzustellen, wobei beispielsweise über die obere Zuführöffnung 17 ein Hohlrohr mit grösserem Innendurchmesser als die Kernstange in den Formhohlraum 17 bis zum unteren Ende eingeführt wird. Beim langsamen Zurückführen dieses Hohlrohres wird dann der Formhohlraum von unten nach oben befüllt.

**Patentansprüche**

1. Verfahren zum Herstellen eines Profiles (21) aus trockenem Pulvermaterial (27) mittels einer einen Formhohlraum (25) manschettenförmig umschliessenden flexiblen Form (7), die auf ihrer ganzen Länge radial von allen Seiten unter Aussendruck setzbar ist und damit das im Formhohlraum (25) befindliche Pulvermaterial (27) zwischen ihrer Innenfläche (8) radial verdichtet, dadurch gekennzeichnet, dass die Herstellung eines in seiner Länge unbegrenzten Profiles (21) abschnittweise erfolgt und dazu der an seinem einen Ende stetig bis auf Profildurchmesser zulaufende und hier durch den vorgepressten Profilabschnitt (21) und an seinem anderen Ende durch die aufeinanderzu konvergierenden Innenflächen (8) der mit einer oberen Zuführöffnung (17) versehenen flexiblen Form (7) begrenzte Formhohlraum (25) mit einer bemessenen Menge an Pulvermaterial (27) gleichmässig gefüllt wird, dass die obere Zuführöffnung (17) verschlossen und dann gepresst wird, wobei der vorher gepresste Profilabschnitt (21) festgeklemmt gehalten wird, so dass wegen der genannten Konvergenz der elastischen Form (7) dessen verjüngt ausgeformtes Profilende (23) durch das radial verdichtete Pulvermaterial (27) überdeckt und dadurch mit diesem verbunden wird, und dass die flexible Form (7) entlastet und der neugepresste Profilabschnitt gerade so weit vorbewegt wird, bis der auf Profilaussendurchmesser zulaufende Bereich des Formhohlraumes (25) das verjüngt ausgebildete Profilende (23) des letzten Profilabschnittes (21) umgibt.

2. Verfahren zur Herstellung von Hohlprofilen nach Anspruch 1 mittels einer Kernstange (37), die unter Bildung eines Formhohlraumes (25) von der manschettenförmig flexiblen Form (7) umschlossen ist, dadurch gekennzeichnet, dass der an seinem oberen Ende durch die aufeinanderzu konvergierenden Innenflächen (8) und durch eine die obere Zuführöffnung (17) durchsetzende Kernstange (37) begrenzte und geschlossene Formhohlraum (25) dadurch gleichmässig mit einer bemessenen Menge an Pulvermaterial (27) befüllt wird, dass das Pulvermaterial (27) dem Formhohlraum (25) über eine in der Kernstange (37) vorgesehene Längsbohrung (39) vorzugsweise mit radialen Austrittsöffnungen zugeführt wird.

3. Verfahren nach Anspruch 2, dadurch gekennzeichnet, dass während des Befüllens des Formhohlraumes (25) die mit den radialen Austrittsöffnungen (41) versehene Kernstange (37) langsam durch den Formhohlraum (25) zurückgezogen wird, während der vorher gepresste Profilabschnitt (21) festgeklemmt gehalten wird.

4. Verfahren nach einem der Ansprüche 1 bis 3, dadurch gekennzeichnet, dass nach Entlasten der flexiblen Form (7) die Kernstange (37) mitsamt dem an ihr anhaftenden Profilabschnitt (21) gerade so weit vorbewegt wird, dass der bis auf Profilaussendurchmesser zulaufende Bereich des Formhohlraumes (25) das spitz ausgeformte Profilende (23) des letzten Profilabschnittes (21) umgibt.

5. Vorrichtung zum Herstellen eines Profiles (21) aus trockenem Pulvermaterial (27) welche einen Formhohlraum (25) umfasst, der manschettenförmig durch eine flexible Form (7) umschlossen ist, die auf ihrer ganzen Länge radial von allen Seiten unter Aussendruck setzbar und damit das im Formhohlraum (25) befindliche Pulvermaterial (27) zwischen der Innenfläche (8) des Formhohlraumes (25) radial verdichtbar ist, dadurch gekennzeichnet, dass der Formhohlraum (25) an seinen beiden Stirnenden gegenüber dessen mittleren Abschnitt (33) verjüngt ausgebildet ist, wobei die Innenwände (8) des Formhohlraumes (25) auf der einen Stirnseite bis auf die verschliessbare Zuführöffnung (17) und an deren anderen Stirnseite des Formhohlraumes (25) bis auf die dem Profildurchmesser entsprechende Profilaustrittsöffnung (19) abnimmt.

6. Vorrichtung nach Anspruch 5, dadurch gekennzeichnet, dass die Kernstange (37) in einem Teillängsbereich mit einer Längsbohrung (39) und vorzugsweise mit radialen Austrittsöffnungen (41) am Ende der Längsbohrung (39) zur Befüllung des Formhohlraumes (25) mit trockenem Presspulver (27) versehen ist.

7. Vorrichtung nach Anspruch 5 oder 6, dadurch gekennzeichnet, dass die den Formhohlraum (25) völlig durchsetzende Kernstange (37) zum Verschluss des Formhohlraumes (25) axial verschieblich ausgebildet ist, wobei nach dem Rückziehen und Befüllen des Formhohlraumes (25) die Austrittsöffnungen (41) in der Kernstange (37) oberhalb des Formhohlraumes (25) zu liegen kommen.

8. Vorrichtung nach einem der Ansprüche 5 bis 7, dadurch gekennzeichnet, dass an der die fertig gepressten Profilabschnitte (21) herausführenden Axialseite eine während des Radialpressens in Axialrichtung auf den gepressten Profilabschnitt (21) wirkenden Druckkräfte reduzierende Kompensationseinrichtung (43) vorgesehen ist.

9. Vorrichtung nach einem der Ansprüche 5 bis 8, dadurch gekennzeichnet, dass die flexible Form (7) zum Profilende (23) des fertig gepressten Profilabschnittes (21) hin über den Bereich, in dem sie radial druckbeaufschlagbar ist, hinaus in der Wandstärke eines am Profilabschnitt (21) anliegenden Fortsatzes (47) im entsprechenden Passsitz am unteren Druckflansch (11) abnimmt.

**Claims**

1. Procedure for the production of a profile (21) from dry powdered material (27) by means of a flexible mould (7) enveloping a mould cavity (25) in a sleeve like manner, the mould being able to be set from the outside by outer pressure radially from all sides throughout its entire length, so that the powdered material (27) contained in the mould cavity (25) is radially compressed between its inner surface, characterised by the fact that the production of a profile (21) unlimited in its length, is carried out in sections and that the mould cavity (25), which is equipped with an upper inlet opening (17), and which at one end tapers down continuously to the profile diameter and is limited here by the previously compressed profile section (21) and at its other end by its converging inner surfaces (8), is equally filled with a measured amount of powdered material (27), that the upper inlet opening (17) is closed and then pressed, whereby the profile section (21) which was pressed before is kept clamped together, so that because of the abovementioned convergence of the elastic mould (7) whose tapered moulded profile end (23) is covered by the radially compressed powdered material (27) and therefore is connected with it, and that the flexible mould (7) is unburdened and the newly pressed profile section is moved forward just so far so that the area of the mould cavity (25) which tapers down to the outer diameter of the profile, surrounds the profile end (23) of the last profile section to have been pressed (21).

2. Process for the production of hollow profiles in accordance with claim 1, by means of a core bar (37), which is surrounded by the sleeve shaped flexible mould (7), forming a mould cavity (25), characterised by the fact that the mould cavity (25) which is limited and closed at its upper end by the inner surfaces (8) converging on one another and by a core rod (37) which penetrates the upper inlet opening (17), is simultaneously filled with a measured amount of powdered material (27), so that the powdered material (27) is led to the mould cavity (25) via a lengthwise boring (39) provided in the core rod (37), preferably with radial outlet openings.

3. Procedure in accordance with claim 2, characterised by the fact that during the filling of the mould cavity (25), the core rod (37) which is equipped with the radial outlet openings (41) is slowly pulled back through the mould cavity (25), while the previously pressed profile section (21) is kept fixedly clamped.

4. Procedure in accordance with one of claims 1 to 3, characterised by the fact that after discharging of the flexible mould (7), the core rod (37), together with the profile section (21) attached to it, is moved exactly so far forwards, that the area of the mould cavity (25) tapering down to the profile outer diameter, surrounds the acutely formed profile end (23) of the final profile section (21).

5. Installation for the manufacture of a profile (21) from dry powdered material (27) which includes a mould cavity (25), surrounded in a sleeve like manner by a flexible mould (7), which can be set from the outside radially and throughout its entire length by outside pressure, so that the powdered material (27) located in the mould cavity (25) is radially compressible between the inner surfaces (8) of the mould cavity (25) characterised by the fact that the mould cavity (25) is tapered at both its frontal ends with regard to its middle section (25), whereby the inner walls (8) of the mould cavity (25) taper on the one frontal side up down to the sealable inlet opening (17) and on the other frontal side of the mould cavity (25) down to the profile outlet opening (19) corresponding to the profile diameter.

6. Installation in accordance with claim 5, characterised by the fact that the core rod (37) is provided along a certain area of its length, with a longitudinal boring (39) and preferably with radial outlet openings (41) on the end of the longitudinal boring (39) for filling of the mould cavity (25) with dry pressed powder (27).

7. Installation in accordance with claim 5 or 6, characterised by the fact that the core rod (37) which fully penetrates the mould cavity (25) to seal the mould cavity (25) is formed to be axially displaceable, whereby after the pulling back and filling of the mould cavity (25), the outlet openings (41) in the core rod (37) come to lie above the mould cavity (25).

8. Installation in accordance with one of claims 5 to 7, characterised by the fact that a compensatory device (43) which reduces the effective pressure in the axial direction on the pressed profile section (21) during the radial pressing, is fitted on the axial side where the ready pressed profile sections (21) come out.

9. Installation in accordance with one of claims 5 to 8, characterised by the fact that the flexible mould (7) at the profile end (23) of the ready pressed profile section (21) tapers off, beyond the area in which it is compressible, in the wall thickness of an extension (47) which lies next to the profile section (21) in a corresponding snug fit at the lower pressure flange (11).

**Revendications**

1. Procédé de fabrication d'un profilé (21) de matière pulvérulente sèche (27) au moyen d'un moule flexible (7) présentant la forme d'un manchon enfermant une cavité (25), lequel peut être soumis sur toute sa longueur à une pression extérieure exercée radialement sur toute sa périphérie et comprimer ainsi radialement entre ses surfaces intérieures (8) la matière pulvérulente (27) se trouvant dans la cavité (25), caractérisé en ce que la fabrication d'un profilé (21) de longueur illimitée a lieu par tronçons et qu'à cet effet la cavité (25) délimitée à une extrémité, laquelle se rétrécit régulièrement jusqu'au diamètre du profilé, par le dernier tronçon de profilé (21) pressé et à l'autre extrémité par les surfaces intérieures (8) convergentes du moule flexible (7), lequel est pourvu d'un orifice d'alimentation supérieur (17), est remplie de façon uniforme de matière pulvérulente (27) selon une quantité calculée, en ce que l'orifice d'alimentation supérieur (17) est obturé et le moule flexible (7) est ensuite comprimé, le dernier tronçon de profilé (21) pressé étant maintenu serré, de sorte que son extrémité conique (23) obtenue du fait de ladite convergence du moule flexible (7) se trouve recouverte par la matière pulvérulente (27) comprimée radialement et se trouve ainsi reliée à celle-ci, et en ce que le moule flexible (7) est libéré de toute pression et le tronçon de profilé nouvellement pressé est directement avancé jusqu'à ce que la région de la cavité (25) du moule (7) correspondant au diamètre extérieur du profilé entoure l'extrémité conique (23) du dernier tronçon de profilé (21).

2. Procédé de fabrication de profilés creux suivant la revendication 1, au moyen d'une tige de noyau (37), laquelle est entourée par le moule flexible (7) en forme de manchon de façon à y créer une cavité (25), caractérisé en ce que la cavité (25), dont l'extrémité supérieure est délimitée par les surfaces intérieures (8) convergentes et fermée par une tige de noyau (37) traversant l'orifice d'alimentation supérieur (17), est remplie de façon uniforme de matière pulvérulente (27) selon une quantité calculée, en versant la matière pulvérulente (27) dans la cavité (25) par un orifice longitudinal (39) prévu dans la tige de noyau (37) de préférence avec des ouvertures radiales.

3. Procédé suivant la revendication 2, caractérisé en ce qu'en cours de remplissage de la cavité (25) du moule (7), la tige de noyau (37) comportant les ouvertures radiales (41) est lentement retirée vers le haut de la cavité (25) du moule (7), alors que le dernier tronçon de profilé (21) pressé est maintenu serré.

4. Procédé suivant une des revendications 1 à 3, caractérisé en ce qu'après relâchement de la pression appliquée sur le moule flexible (7), la tige de noyau (37) avec le tronçon de profilé (21) y adhérant est directement avancée jusqu'à ce que la région de la cavité (25) du moule (7) correspondant au diamètre extérieur du profilé entoure l'extrémité conique (23) du dernier tronçon de profilé (21).

5. Dispositif pour la fabrication d'un profilé (21) en matière pulvérulente sèche (27), comportant une cavité (25) entourée par un moule flexible (7) présentant la forme d'un manchon, lequel peut être soumis sur toute sa longueur à une pression extérieure exercée radialement sur toute sa périphérie et comprimer ainsi radialement entre les surfaces intérieures (8) de la cavité (25) la matière pulvérulente (27) se trouvant dans la cavité (25), caractérisé en ce que la cavité (25) du moule (7) se rétrécit à ses deux extrémités par rapport à sa partie centrale (33), la paroi intérieure (8) de la cavité (25) se reserrant à une extrémité jusqu'à l'orifice d'alimentation (17) pouvant être obturé et à l'autre extrémité de la cavité (25) jusqu'à l'orifice de sortie (19) du profilé correspondant au diamètre du profilé.

6. Dispositif suivant la revendication 5, caractérisé en ce que la tige de noyau (37) présente un tronçon comportant un orifice longitudinal (39) et de préférence des ouvertures radiales (41) à l'extrémité de l'orifice longitudinal (39), en vue du remplissage de la cavité (25) du moule (7) avec de la matière pulvérulente sèche (27).

7. Dispositif suivant la revendication 5 ou 6, caractérisé en ce que la tige de noyau (37) traversant entièrement la cavité (25) du moule (7) peut y être déplacée axialement en vue de réaliser la fermeture de la cavité (25), les ouvertures radiales (41) prévues dans la tige de noyau (37) se trouvant à l'extérieur de la cavité (25) du moule (7) après retrait de ladite tige (37) et remplissage de ladite cavité (25).

8. Dispositif suivant une des revendications 5 à 7, caractérisé en ce qu'à l'extrémité axiale de la cavité (25) du moule (7) correspondant à la sortie du dernier tronçon de profilé (21) pressé, il est prévu un dispositif de compensation (43) réduisant la pression exercée dans le sens axial sur le dernier tronçon de profilé (21) pressé, durant la compression radiale.

9. Dispositif suivant une des revendications 5 à 8, caractérisé en ce qu'à son extrémité correspondant à l'extrémité du dernier tronçon de profilé (21) pressé, en dehors de la zone où il n'est pas soumis à une pression radiale, le moule flexible (7) présente un prolongement (47) d'épaisseur de paroi décroissante, lequel se trouve installé dans un logement correspondant prévu dans la bride de pression inférieure (11).

FIG. 3

FIG. 2

FIG. 1

FIG. 6.

FIG. 5

FIG. 4